# EUROPEAN PATENT APPLICATION

(11) **EP 4 835 916 A1**
(43) Date of publication of application: **04.11.2026**
(21) Application number: 26174689.5
(22) Date of filing: 27.04.2026
(51) Int. Cl.: H01B 5/08

(54) **ELECTRICAL CABLE, CLAMP FOR ELECTRICAL CABLES AND ELECTRIC DEVICE COMPRISING THIS CABLE OR CLAMP**

(30) Priority: 28.04.2025 IT 202500009315
(71) Applicant: Beretta S.r.l., 20129 Milano (IT)
(72) Inventor: BERETTA, Ambrogio, 20161 Milano (IT); BERETTA, Silvana, 20161 Milano (IT); BERETTA, Giulio, 20091 Bresso (IT); ORNAGHI, Gianluca, 20159 Milano (IT); RICCARDI, Giacomo Maria, 20851 Lissone (IT); ADIFON, Leandre, Moorseville, 28117 (US); MAZZUCCHELLI, Marco, 21040 Gerenzano (IT); MINOLA, Davide, 20134 Milano (IT); VITALI, Massimiliano, 20158 Milano (IT)
(74) Representative: Pizzoli, Antonio Mario

(57) **Abstract**

Electric cable comprising one or more conductive wires (1) which are coupled with at least one layer (3) of dielectric material and comprise one or more conductive strands, wherein said one or more conductive wires (1) are stranded with each other and/or with one or more support wires (2, 2') comprising one or more support strands. The present description also relates to a clamp configured to lock this electrical cable and an electric device comprising this electrical cable or this clamp.

## Description

### Technical field

The present description relates to an electrical cable, in particular an electrical cable that can be used to power and support an electric device, such as a pendant light. The present description also relates to a clamp configured to lock this electrical cable and an electric device incorporating this electrical cable or clamp.

### Background of the description

Known electrical cables comprise one or more conductor wires coated with a layer of dielectric material and can be used to power electric devices such as a pendant light, which is attached to a ceiling via one or more support wires separated from the conductor wires. The presence of these support wires, in addition to an electrical cable, can, however, ruin the aesthetics of the pendant light, increase manufacturing costs, and make installation of the pendant light more complex.

Document CN 202711808 U describes an electrical wire comprising a central rod with a diameter of 9-10 mm made of carbon fiber composite material. This central rod is surrounded by a plurality of conductive strands coated with a layer of dielectric material, which is in turn coated with a protective layer of composite material. This known electrical wire is relatively rigid and expensive due to the diameter and material of the central rod, despite being able to implement only one electrical line.

Document US 2007/0000682 A1 describes an electrical cable comprising a plurality of electrical wires arranged around a central core or central electrical wire. This known electrical cable is relatively difficult and expensive to manufacture due to its relatively complex structure.

Document US 2463144 A describes a clamp that is used to make an electrical connection at one end of an electrical cable, so it could not be used, for example, to lock an object along the electrical cable without making an electrical connection between the clamp and the conductive strands of the electrical cable.

### Summary of the description

The object of the present description is therefore to provide an electrical cable and a clamp for electrical cables that solve these problems. Said object is achieved with an electrical cable, a clamp for electrical cables, and an electric device whose main features are specified in the attached claims, to be considered an integral part of the present description.

Thanks to its particular structure, the electrical cable according to the present description offers a high tensile strength, so it can be used to suspend relatively heavy electric devices or in other applications where a very resistant electrical cable is required, such as in construction, industry, the automotive and naval sectors.

The electrical cable preferably comprises one or more layers of dielectric material that may be arranged not only around the conductive wires but also around one or more support wires coupled with these conductive wires, so as to maintain mechanical strength and electrical safety even in the event of partial damage of the electrical cable. Due to its mechanical strength and insulation properties, the electrical cable can also be used underwater or in environments exposed to chemical or atmospheric agents.

The special arrangements with which the conductive wires are coupled with the support wires and with the layers of dielectric material make the electrical cable not only very resistant but also aesthetically pleasing and relatively simple and economical to manufacture and install.

Particular dimensions and arrangements of the conductive wires with respect to the support wires allow for optimizing the size, resistance and aesthetics of the electrical cable.

The clamp according to the present description also allows the electrical cable thus created to be automatically locked and manually unlocked quickly and easily, without damaging it and without using tools, so that, for example, one or more clamps can be used to easily hang an electric device such as a pendant lamp at the desired height, using only one electrical cable even when the pendant lamp is relatively heavy.

The electrical cable and the clamp according to the present description may include further particular features which are described below and offer numerous advantages in terms of simplicity of manufacture, production costs, reliability over time and safety in use compared to the prior art.

### Brief description of the drawings

Further advantages and features of the electrical cable, the clamp for electrical cables and the electric device according to the present description will become apparent to those skilled in the art from the following detailed description of some embodiments, to be considered as non-limiting examples of the claims, with reference to the attached drawings in which:
- figure 1 is a front view of a first embodiment of the electrical cable,
- figure 2 is a cross-sectional view of the electrical cable of figure 1,
- figure 3 is a partial side view of the electrical cable of figure 1,
- figure 4 is a front view of a second embodiment of the electrical cable,
- figure 5 is a cross-sectional view of the electrical cable of figure 4,
- figure 6 is a partial side view of the electrical cable of figure 4,
- figure 7 is a front view of a third embodiment of the electrical cable,
- figure 8 is a cross-sectional view of the electrical cable of figure 7,
- figure 9 is a partial axonometric view of a fourth embodiment of the electrical cable,
- figure 10 is an enlarged cross-sectional view of the electrical cable of figure 9,
- figure 11 is a partial axonometric view of a fifth embodiment of the electrical cable,
- figure 12 is an enlarged cross-sectional view of the electrical cable of figure 11,
- figure 13 is a top view of one embodiment of the clamp,
- figure 14 is a bottom view of the clamp in figure 13,
- figure 15 is an exploded view of the clamp of figure 13,
- figure 16 is a side view of the clamp of figure 13 with the electrical cable of figure 1,
- figure 17 is a partial view of the clamp of figure 16;
- figure 18 is a partial side view of one embodiment of the electric device.

### Exemplary embodiments

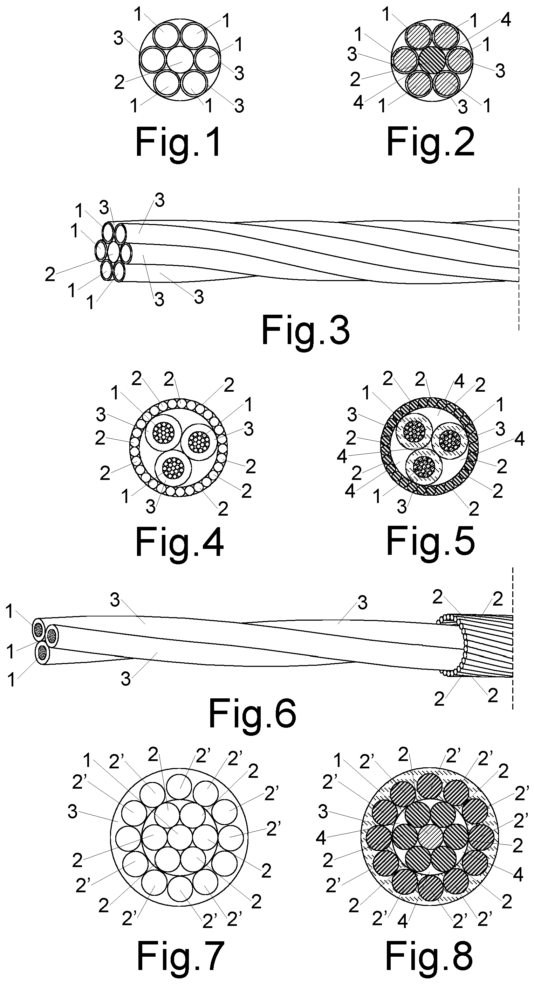

Figures 1-3 show a first embodiment of the electrical cable, which comprises one or more conductive wires 1 coupled with one or more support wires 2. In this embodiment, six conductive wires 1 are arranged helically around a support wire 2, the conductive wires 1 and the support wire 2 have substantially the same diameter and/or comprise one strand each. At least one conductive wire 1 is coupled with, in particular coated with, at least one layer 3 of dielectric material, in particular a layer of dielectric enamel which is applied around the conductive wire 1 before coupling the wires 1, 2 of the electrical cable together. Said one or more conductive wires 1 are stranded with each other and/or with said one or more support wires 2. Preferably, the spaces 4 between one or more of said conductive wires 1 and/or between one of said support wires 2 are not filled with additional material.

Figures 4-6 show a second embodiment of the electrical cable, similar to the first embodiment in that it comprises one or more conductive wires 1 coupled with one or more support wires 2. In this embodiment, three conductive wires 1 are stranded together and are coupled with approximately thirty support wires 2 which are arranged helically around the braid of the conductive wires 1. Each conductive wire 1 is covered by at least one layer 3 of dielectric material, in particular a sheath 3 which surrounds this conductive wire 1, and/or comprises a plurality of conductive strands stranded together. The support wires 2 have a diameter smaller than the diameter of the conductive wires 1 and a diameter larger than the conductive strands of the conductive wires 1. The stranding process of the electrical cable makes the sheaths 3 integral by interference with the support wires 2. Preferably, the centers of the conductive wires 1 are arranged at the vertices of a substantially regular polygon, in particular a substantially regular triangle, so that the center of this polygon is free, i.e. there are no conductive wires, support wires or other wires at the center of the electrical cable.

Figures 7-8 show a third embodiment of the electrical cable, similar to the first embodiment in that it comprises one or more conductive wires 1 coupled with one or more support wires 2. In this embodiment, six support wires 2 are arranged helically around a conductive wire 1 and are in turn surrounded by further support wires 2' which are incorporated, preferably by coextrusion, in a single sheath 3 having a tubular shape and are arranged helically around said six support wires 2. The conductive wire 1 and the support wires 2, 2' have substantially the same diameter and/or comprise one strand each. The stranding process of the electrical cable makes the sheath 3 of the conductive wires 1 integral by interference with the support wires 2.

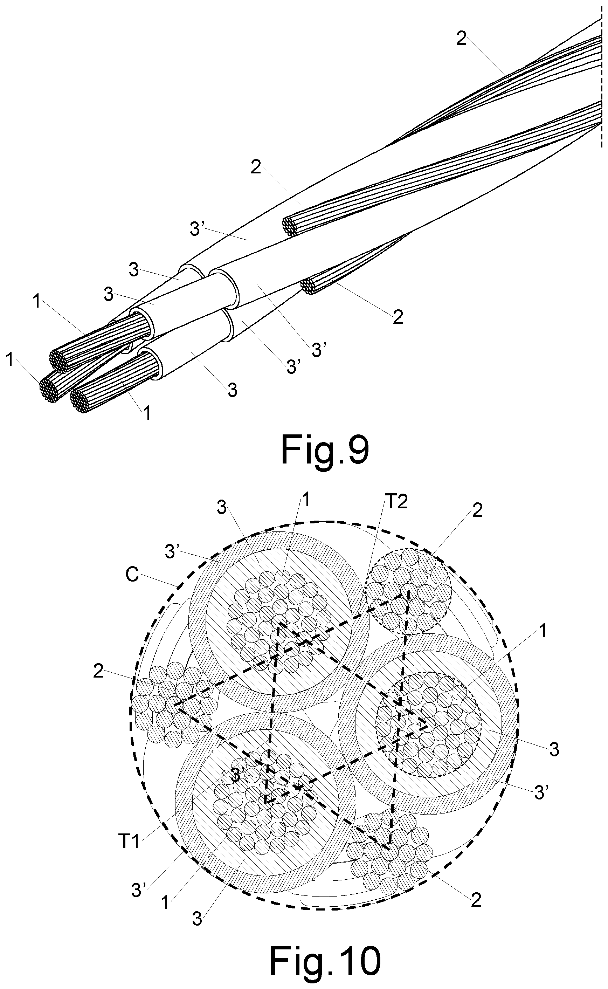

Figures 9-10 show a fourth embodiment of the electrical cable, similar to the second embodiment in that it comprises one or more conductive wires 1 coupled with one or more support wires 2. In this embodiment, each conductive wire 1 comprises a plurality of conductive strands that are coated with one or more layers 3, 3' of dielectric material, in particular two sheaths of dielectric material, wherein an inner sheath 3 is coated with an outer sheath 3'. Preferably, the support wires 2 comprise a plurality of strands that are stranded with each other and are exposed, i.e., they are not covered by a layer of additional material. The stranding process of the electrical cable makes the outer sheaths 3' of the conductive wires 1 integral by interference with the support wires 2.

Preferably, the centers of at least three conductive wires 1 and/or at least three support wires 2 are arranged at the vertices of one or two substantially regular polygons, in particular at the vertices of a first triangle T1 and/or a second triangle T2 (shown with dashed lines in Figure 10), wherein the number of conductive wires 1 and/or support wires 2 is equal to the number of vertices of the respective polygon, so that the center of this polygon is free, i.e. there are no conductive wires, support wires or other wires at the center of the polygon. Preferably, the first triangle T1 and the second triangle T2 essentially form a six-pointed star and/or the first triangle T1 is smaller than the second triangle T2, so that the points formed by the first triangle T1 are smaller than the points formed by the second triangle T2. Preferably, the conductive wires 1 and the support wires 2 are arranged inside a circle C and are substantially tangent to this circle C, and/or the diameter of the conductive wires 1 (which comprise the layers 3, 3') is greater, in particular at least double, than the diameter of the support wires 2. Preferably, the conductive wires 1 are in contact with each other and a support wire 2 is in contact with two conductive wires 1 but not with the other support wires 2.

In the present embodiment, the support wires 2 comprise nineteen strands, in particular made of steel, with twelve strands arranged around six strands which are in turn arranged around a central strand.

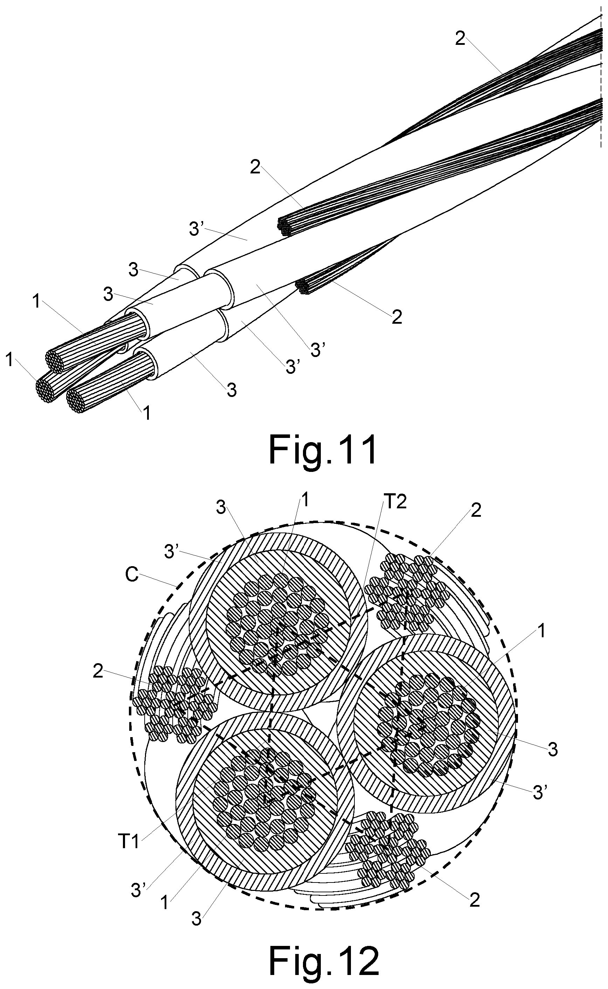

Figures 11-12 show a fifth embodiment of the electrical cable, substantially identical to the fourth embodiment, with the difference that the support wires 2 comprise forty-nine strands, in particular made of steel, which are grouped into six groups arranged around a central group, wherein each group comprises six strands which are in turn arranged around a central strand.

Preferably, in the first three embodiments the diameter of the electrical cable is 1.2-3.0 mm, the diameter of the conductive wires 1 is 0.1-0.5 mm, the diameter of the support wires 2, 2' is 0.2-0.5 mm, the thickness of the dielectric enamel layer 3 is 0.01-0.05 mm, and/or the winding pitch of the conductive wires 1 or the support wires 2, 2' which are arranged helically is 4-6 mm.

Preferably, in the fourth embodiment and in the fifth embodiment the diameter of the conductive wires 1 (including the layers 3, 3') is 1.8-2.4 mm, in particular 2.0-2.2 mm, and/or the diameter of the support wires 2 is 0.75-1.5 mm, in particular 1.0-1.25 mm, and/or the thickness of the layers 3, 3' is 0.1-0.3 mm, in particular 0.15-0.25 mm, and/or the winding pitch of the conductive wires 1 and the support wires 2 is 30-45 mm, in particular 35-40 mm, and/or the diameter of the electrical cable, i.e. of the circle C, is 3-6 mm, in particular 4-5 mm.

Alternative embodiments may have the same shapes but dimensions proportional to the dimensions indicated above.

Thus, at least one conductive wire 1 comprises one or more conductive strands, in particular made of copper, aluminium or their alloys, e.g. Percon^{®} 19 alloy. At least one support wire 2, 2' comprises one or more support strands, in particular made of polymeric material or metal, e.g. stainless steel, galvanised steel, aramid fibre or carbon fibre. One or more conductive wires 1 and/or one or more support wires 2, 2' may be coated, individually or in groups, with at least one layer 3 of dielectric material, in particular a dielectric enamel and/or a sheath made of dielectric material, preferably silicone rubber, a thermosetting polymer, for example polyurethane (PU) or polyimide (PI), or a thermoplastic polymer, for example fluorinated ethylene propylene (FEP), polyvinyl chloride (PVC), polyamide (PA), polypropylene (PP), polyethylene (PE) or ethylene tetrafluoroethylene (ETFE). During the manufacturing of the electrical cable, the sheath 3 may be extruded together with one or more conductive wires 1 and/or one or more support wires 2, 2' that are included in this electrical cable. The conductive wires 1 and the support wires 2, 2' have substantially the same length.

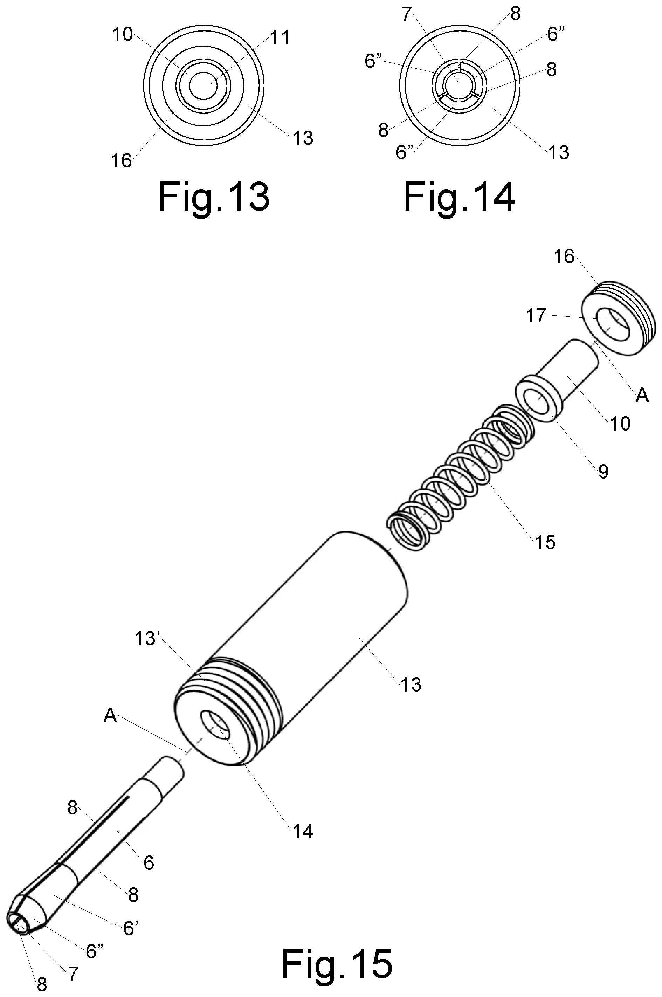

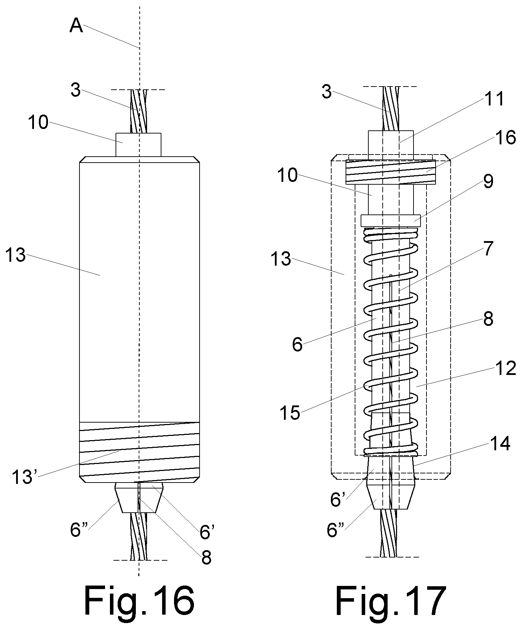

Figures 13-17 show one embodiment of the clamp, which comprises a slider 6 having an axial cavity 7 (shown with dotted lines in Figure 17) extending along a longitudinal axis A between two ends of the slider 6, wherein both ends of the slider 6 are open, so that a cable according to one of the embodiments described above can slide in the axial cavity 7 of the slider 6 and beyond the ends of the slider 6 along the longitudinal axis A. The slider 6 comprises a head 6' and one or more radial slots 8 which start from one end of the slider 6, extend along axes substantially parallel to the longitudinal axis A and pass through the head 6'. In particular, the slider 6 comprises at least three radial slots 8 which are arranged along radial planes disposed at approximately 120° from each other with respect to the longitudinal axis A. Preferably, the slider 6 and/or the axial cavity 7 have a substantially cylindrical shape and/or the head 6' has a larger shape than the rest of the slider 6, in particular a substantially frustoconical shape. The slider 6 is made of an elastically deformable material. One end of the slider 6 may terminate with a tip 6" having a tapered shape, in particular a substantially frustoconical shape, wherein the head 6' is arranged between the rest of the slider 6 and the tip 6". The radial slots 8 also pass through the tip 6" of the slider 6.

The slider 6 comprises a radial projection 9, in particular arranged around a sleeve 10 joined to the slider 6 and comprising an axial cavity 11 (shown with dotted lines in figure 17) which extends along the longitudinal axis A between two ends of the sleeve 10, wherein both ends of the sleeve 10 are open, so that a cable according to one of the embodiments described above can slide in the axial cavity 11 and beyond the ends of the sleeve 10 of the slider 6 along the longitudinal axis A.

The slider 6 is slidably arranged in an axial cavity 12 arranged between two ends of a housing 13 (shown with dotted lines in Figure 17), wherein both ends of the housing 13 are open, so that the slider 6 can slide in the axial cavity 12 of the housing 13 along the longitudinal axis A and so that a cable according to one of the embodiments described above can slide in the axial cavity 12 of the housing 13 and beyond the ends of the housing 13 along the longitudinal axis A. The axial cavity 12 and/or the housing 13 preferably have a substantially cylindrical shape. At least one portion of the head 6' of the cursor 6 is arranged in an axial hole 14 obtained at one of said ends of the housing 13. The axial hole 14 preferably has a substantially frustoconical shape having substantially the same orientation and substantially the same vertex angle as the substantially frustoconical shape of the head 6' of the cursor 6.

At least one helical spring 15 is compressed and arranged around the slider 6 in the axial cavity 12 of the housing 13, so that one end of the helical spring 15 presses against the radial projection 9 of the slider 6 and the opposite end of the coil spring 15 presses against an internal portion of the housing 13 arranged around the axial hole 14, thus pulling the head 6' of the slider 6 towards the axial hole 14.

In use, the head 6' of the slider 6, pulled by the helical spring 15 against the axial hole 14, is deformed and compressed with the at least partial closing of the radial slots 8 of the slider 6. If an electrical cable according to one of the embodiments described above, for example according to the first embodiment, is arranged in the slider 6 and has an external diameter substantially equal to the diameter of the axial cavity 7 of the slider 6, the compression of the head 6' of the slider 6 caused by the expansion of the helical spring 15 against the axial hole 14 of the housing 13 causes a narrowing of the axial cavity 7 and a pressure of the slider 6 against a portion of the electrical cable, for example against a portion of the layers 3 of dielectric material of the conductive wires 1 arranged on the outside of the electrical cable, so as to lock the electrical cable in the slider 6 and therefore in the clamp comprising this slider 6.

Preferably, the housing 13 comprises a threaded portion 13' arranged around the end of the housing 13 provided with the axial hole 14 and/or a ring 16 provided with an axial hole 17 and an external thread screwed into a threaded hole arranged at one end of the housing 13 opposite the end of the housing 13 provided with the axial hole 14, wherein the slider 6 or the sleeve 10 of the slider 6 is slidably arranged in the axial hole 17 of the ring 16. In an alternative embodiment, the ring 16 may be locked in the housing 13 by interference or otherwise.

A portion of the slider 6, in particular a portion of the sleeve 10 of the slider 6, protrudes outside the housing 13 from the end of the housing 13 opposite the end of the housing 13 provided with the axial hole 14. With this arrangement, a user can release the electrical cable from the clamp by pressing this portion of the slider 6 towards the housing 13, thus overcoming the force exerted by the helical spring 15 and separating the head 6' of the slider 6 from the axial hole 14 of the housing 13, so that the head 6' expands elastically and frees the electrical cable.

Preferably, the slider 6, the head 6' of the slider 6, the tip 6" of the slider 6, the axial recess 7 of the slider 6, the radial projection 9 of the slider 6, the sleeve 10 of the slider 6, the axial recess 11 of the sleeve 10, the housing 13, the axial recess 12 of the housing 13, the axial hole 14, the helical spring 15 and/or the threaded ring 16 are substantially symmetrical with respect to the longitudinal axis A and/or are substantially coaxial with respect to the longitudinal axis A.

Preferably, the slider 6, the sleeve 10, the housing 13, the helical spring 15 and/or the threaded ring 16 are made of plastic or metal, in particular an aluminum alloy, galvanized steel, stainless steel or brass.

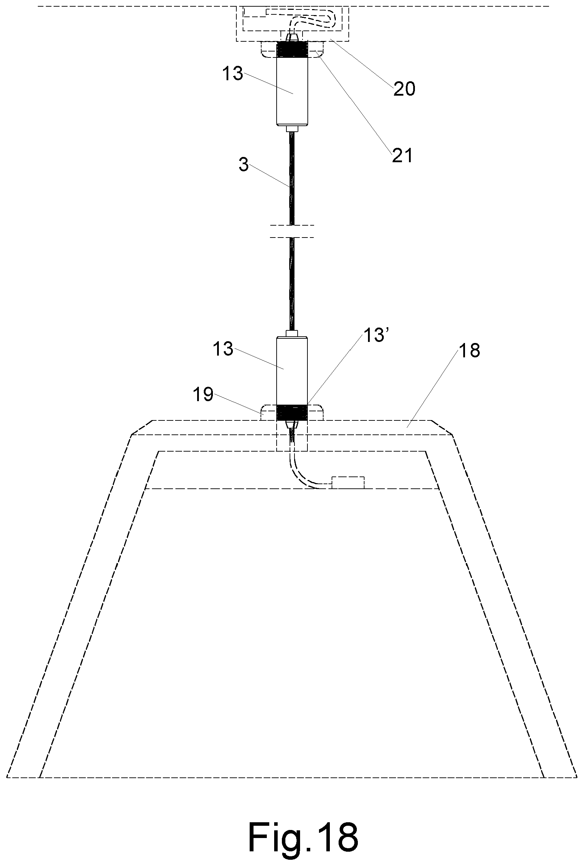

Figure 18 shows an embodiment of a first electric device 18, in particular a pendant light, which comprises at least one clamp according to the embodiment described above. The threaded portion 13' of the housing 13 of this clamp is screwed into a threaded ring 19 fixed to the electric device 18. A second electric device 20, in particular an electrical terminal provided with means for fixing to a surface, for example the lower surface of a ceiling, comprises a second clamp according to the embodiment described above, which is screwed into a threaded ring 21 fixed to the electric device 20. An electrical cable, for example according to the first embodiment described above, can be clamped between the two clamps of the first electric device 18 and the second electric device 20. The conductive wires 1 of the cable can be electrically and mechanically connected to electrical connectors arranged in the first electric device 18 and/or in the second electric device 20. The distance between the first electric device 18 and the second electric device 20 can be varied by manually unlocking at least one of the two clamps, sliding the cable into the unlocked clamp and releasing the unlocked clamp, so that the electrical cable is locked again thanks to the action of the helical spring 15 on the slider 6 of this clamp.

Variations or additions may be made by those skilled in the art to the embodiments described and illustrated herein, while remaining within the scope of the following claims. In particular, further embodiments may include the technical features of one of the following claims with the addition of one or more technical features described in the text or illustrated in the drawings, taken individually or in any mutual combination, and including equivalent characteristics thereof.

Furthermore, terms used in the text and/or drawings are intended to be inclusive unless otherwise specified, so for example the terms "a", "comprising", "including a", "having two", or "provided with" mean respectively "at least one", "comprising, but not limited to", "including at least one", "having two or more", or "provided with at least one".

Angles, proportions and values quoted in the text and/or shown in the drawings include a tolerance of at least 5%, unless otherwise specified.

## Claims

1. An electrical cable comprising one or more conductive wires (1) which are coupled with one or more support wires (2, 2') comprising one or more support strands, wherein said one or more conductive wires (1) are coupled with at least one layer (3, 3') of dielectric material and comprise one or more conductive strands, **characterized in that** said one or more conductive wires (1) are stranded with each other and/or with said one or more support wires (2, 2') .

2. The electrical cable according to the preceding claim, wherein the spaces (4) between one or more of said one or more conductive wires (1) and/or between one or more of said one or more support wires (2) are not filled by additional material.

3. The electrical cable according to one of the preceding claims, wherein said one or more support wires (2) comprise a plurality of strands which are stranded with each other and are exposed.

4. The electrical cable according to one of the preceding claims, wherein the centers of at least three conductive wires (1) and/or of at least three support wires (2) are arranged substantially at the vertices of a polygon which is substantially regular, wherein the center of said polygon is free.

5. The electrical cable according to the preceding claim, wherein the centers of three conductive wires (1) of said at least three conductive wires (1) are arranged at the vertices of a first triangle (T1) and the centers of three support wires (2) of said at least three support wires (2) are arranged at the vertices of a second triangle (T2).

6. The electrical cable according to the preceding claim, wherein the first triangle (T1) is smaller than the second triangle (T2).

7. The electrical cable according to one of the preceding claims, wherein the conductive wires (1) and the support wires (2) are arranged inside a circle (C) and are substantially tangent to this circle (C).

8. The electrical cable according to one of the preceding claims, wherein the diameter of the conductive wires (1) is at least twice the diameter of the support wires (2).

9. The electrical cable according to one of the preceding claims, wherein the conductive wires (1) are in contact with each other and a support wire (2) is in contact with two conductive wires (1) but not with the other support wires (2).

10. A clamp configured to lock the electrical cable according to one of the preceding claims, which comprises a slider (6) having an axial cavity (7) which extends along a longitudinal axis (A) between two ends of the slider (6), wherein the slider (6) comprises a head (6') and one or more radial slots (8) which extend along axes substantially parallel to the longitudinal axis (A) and pass through the head (6'), wherein the slider (6) is made of an elastically deformable material, wherein the slider (6) is arranged slidably in an axial cavity (12) arranged between two ends of a housing (13), so that the slider (6) can slide in the axial cavity (12) of the housing (13) along the longitudinal axis (A), wherein at least one portion of the head (6') of the slider (6) is arranged in an axial hole (14) obtained at one of said ends of the housing (13), wherein at least one helical spring (15) is compressed into the axial cavity (12) of the housing (13), **characterised in that** the slider (6) comprises a radial projection (9), wherein the at least one helical spring (15) is arranged around the slider (6), wherein both ends of the slider (6) and the housing (13) are open, wherein one end of the helical spring (15) presses against the radial projection (9) of the slider (6) and the opposite end of the helical spring (15) presses against an internal portion of the housing (13) arranged around the axial hole (14).

11. The clamp according to the preceding claim, wherein the radial projection (9) of the slider (6) is arranged around a sleeve (10) which is joined to the slider (6) and which comprises an axial cavity (11) extending along the longitudinal axis (A) between two ends of the sleeve (10), wherein both ends of the sleeve (10) are open.

12. The clamp according to one of claims 10 to 11, wherein the housing (13) has a substantially cylindrical shape and comprises a threaded portion (13') arranged around the end of the housing (13) provided with the axial hole (14).

13. The clamp according to one of claims 10 to 12, wherein a portion of the slider (6) or the sleeve (10) of the slider (6) protrudes outside the housing (13) from the end of the housing (13) opposite the end of the housing (13) provided with the axial hole (14).

14. The clamp according to one of claims 10 to 13, wherein the housing (13) comprises a ring (16) provided with an axial hole (17) and an external thread screwed into a threaded hole arranged at the end of the housing (13) opposite the end of the housing (13) provided with the axial hole (14), wherein the slider (6) or the sleeve (10) of the slider (6) is slidably arranged in the axial hole (17) of the ring (16).

15. An electric device (18, 20) comprising at least one electrical cable according to one of claims 1 to 9 and/or at least one clamp according to one of claims 10 to 14.
